# EUROPEAN PATENT APPLICATION

(11) **EP 1 557 702 A2**
(43) Date of publication of application: **27.07.2005**
(21) Application number: 05000934.9
(22) Date of filing: 18.01.2005
(51) Int. Cl.: G02B 6/122, G02B 6/136, G02B 6/35, G02B 6/28

(54) **Ultrahigh-index-contrast planar strictly non-blocking high-port-count cross-connect switch matrix**

(30) Priority: 20.01.2004 US 537724 P; 29.06.2004 US 879264
(71) Applicant: E.I. du Pont de Nemours and Company, Wilmington, DE 19805 (US)
(72) Inventor: Eldada, Louay, Lexington Massachusetts 02215 (US); Junichiro, Fujita, Boston Massachusetts 02215 (US)
(74) Representative: Hughes, Andrea Michelle

(57) **Abstract**

The present invention is directed to highly integrated lightwave circuits made from ultrahigh-index-contrast materials. Specifically the present invention is directed to optical switch arrays and means for their fabrication.

## Description

### FIELD OF THE INVENTION

The present invention is directed to highly integrated lightwave circuits made from ultrahigh-index-contrast materials. Specifically the present invention is directed to optical switch arrays and means for their fabrication.

### BACKGROUND OF THE INVENTION

Planar lightwave circuit based cross-connect switch arrays are known in the art. Okuno et al, *Proc. ECOC,* 4 p. 83 (1994), discloses a strictly nonblocking 16 × 16 thermooptic matrix switch using silica-based planar lightwave circuits. Goth et al, *J. Lightwave Tech.,* 19, p. 371 (2001) discloses a low-loss and high-extinction-ratio strictly non-blocking 16×16 thermooptic matrix switch array using silica-based planar lightwave circuits on a 6-in (15 cm) wafer. The switch arrays of both Goth et al and Okuno et al are based upon the thermo-optic effect in a Mach-Zehnder interferometer configuration. The size of switching matrices implemented in silica on a silicon substrate is limited by the refractive index contrast that may be readily achieved in silica, which is at most around 4%.

Rabbering et al, *Proc. ECOC* 27, PD-78 (2001), disclose a polymeric 16×16 digital optical switch matrix employing the thermo-optic effect in 1×2 Y-branch or digital optical switch configurations.

Eldada, *Proc. SPIE* 5225, 49 (2003), discloses a planar polymer waveguide technology platform characterized by low loss, and high extinction and low power consumption in thermo-optic devices.

### SUMMARY OF THE INVENTION

The present invention provides a planar switch matrix comprising
a waveguide layer and an electrode layer,
the waveguide layer comprises a plurality of 1×2 Y-branch thermo-optic digital optical switches, each said Y-branch comprises a buried channel waveguide exhibiting a refractive index contrast of greater than 5%,
the electrode layer comprises a plurality of electrodes, each electrode being disposed on the cladding layer of said buried channel waveguide, two thus disposed electrodes per Y-branch.

The present invention further provides a method for performing an optical switching function, the method comprising
(a) directing an incoming optical signal to a first switch in a planar switch matrix;
(b) directing said incoming signal to one or more additional switches by virtue of selective thermo-optically driven activation and deactivation of an interconnected sequence of one or more of the other switches in the planar switch matrix; said planar switch matrix comprising a waveguide layer and an electrode layer,
the waveguide layer comprising a plurality of 1 x2 Y-branch thermo-optic digital optical switches, each said Y-branch comprising a buried channel waveguide exhibiting a refractive index contrast of greater than 5%,
the electrode layer comprising a plurality of electrodes, each electrode being disposed on the cladding layer of said buried channel waveguide, two thus disposed electrodes per Y-branch.

Preferred embodiments will now be described, by way of example only, with reference to the drawings.

### BRIEF DESCRIPTION OF THE FIGURES

Figure 1 depicts 20 stages of 2,095,104 1 x2 switches which make up a 1024×1024 strictly non-blocking cross-connect switch matrix of the invention.
Figure 2 depicts a 2×2 MMI-based thermo-optic switch for a 30% index contrast in (a) the bar state and (b) the cross state.
Figure 3 depicts top and side views of multi-level optical interconnects used to minimize chip dimensions and eliminate the excess loss at waveguide crossings.

### DETAILED DESCRIPTION

In the practice of the present invention, switching matrices of as high as 1024x1024 arrays have been simulated by utilizing index contrasts as high as 30%. In one embodiment of the present invention, a 1024×1024 optical switch matrix was simulated which measured 4.2×6.3 cm² which would be small enough to have 4 such matrices fit on a standard 6" (15 cm) silicon wafer.

In the present invention, an index contrast of at least 5% and preferably about 30% is provided in a buried-channel configuration, enabling ultra-high confinement of the optical mode and ultra-small radii of curvature in bends. In a preferred embodiment, polymeric materials having a 30% contrast in refractive index are employed to form a buried channel waveguide, which is key to the fabrication of the planar lightwave circuit components of the switch of the present invention. Since the utilization of the thermo-optic effect for optical switching purposes requires the deposition of electrodes on the surface of the waveguide, only a buried channel waveguide, as opposed to an air-clad waveguide, is suitable for use.

The generic layout used for switch matrices, based on 1 ×2 thermo-optic Y-branch digital optical switches as the smallest building block, is the Recursive Tree Structure (RTS). This structure is used because of the acceptable crossing angles, and because of its compatibility with the use of digital-optical-switch-based switches and combiners.

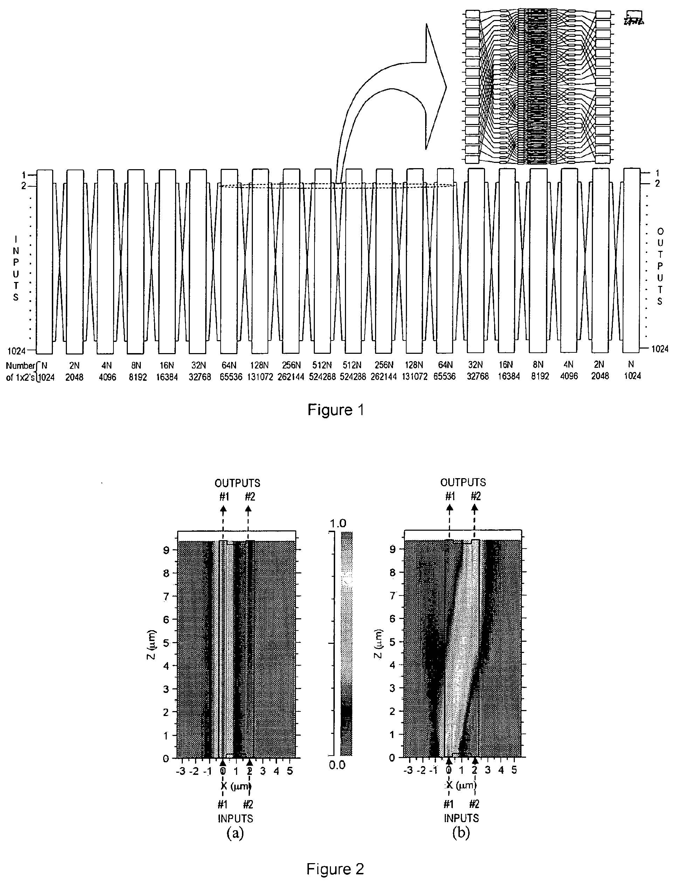

The present invention provides an RTS N×N design (where N=2ⁿ) There are 2N(N-1) 1 ×2 switches arranged in 2n stages connected with 2n-1 optical interconnect stages. In a preferred embodiment of the present invention, a 1024×1024=2¹⁰×2¹⁰ RTS design, depicted in Figure 1, includes 2×1024×1023=2,095,104 1 ×2 switches arranged in 2×10=20 stages connected with 2×10-1=19 optical interconnect stages. This represents an array of about 2 million 1 ×2 switches interlinked with 4,190,208 S-bends that intersect at 6,816,768 locations to provide a strictly non-blocking connectivity.

One of skill in the art will appreciate that both insertion loss and cross-talk in the array of Figure 1 will depend upon the path the given optical signal follows since different paths through the matrix have different lengths and different numbers of crossings. The lowest loss and lowest crosstalk is associated with the 1-to-1 and 1024-to-1024, which are the shortest paths and do not include any crossings. The longest paths, 1-to-1024 and 1024-to-1, with 3,047 crossings, would be expected to exhibit larger insertion loss and more cross talk.

The present invention, described in the context of N×N switches, is broadly applicable to M×N switches, where M and N are two independent integer numbers.

### Design

The design of the switch matrix of the invention is based upon the use of (I) straight waveguides, (ii) bends, (iii) crossings, and (iv) 1×2 Y-branch thermo-optic digital optic switches. When these building blocks are characterized and optimized individually, the well-known principles of superposition can be used to accurately predict the behavior of the entire switching circuit.

The goal is a switch matrix that is characterized over-all as exhibiting insertion loss in the range of 0.01 to 0.2 dB/cm at 1550 nm wavelength, cross-talk suppression in the range of -40 to -60 dB, and power consumption by the thermo-optic switch of 20 to 50mW per heater.

To that end, in the practice of the present invention it has been found convenient to simulate individual building blocks using the Beam Propagation Method (BPM ― Beam Prop™) and Film Mode Matching (FMM ― Firmware™) methods of analysis. The design rules resulting from the use of these models are presented in Table 1.

**Table 1**

| **Building Block** | **Design Rules** |
|---|---|
| Straight Waveguide | 0.5×0.5 µm² ΔN = 30% Clad Thickness > 1.1 µm Minimal Separation = 2.2 µm |
| Bend | Radius of Curvature > 10 µm |
| Crossing | Crossing Angle > 37° |
| DOS | Y-branch Length = 98 µm Output Separation = 4.4 µm |

The switch matrix of the present invention comprises a waveguide layer and an electrode layer. The design rules in Table 1 define the waveguide layer parameters of the switch matrix of the present invention. The electrode layer provides local heating for the thermo-optic actuation of the switches. Each digital optical switch (1×2 Y-branch) is provided with two heaters according to the present invention, each heater having two connections. Connecting to each heater individually would require 4,190,210 bond pads, including two grounds. Serializing all switching stages without losing functionality, through the use of vias, reduces this number. Consequently, the electrical part of the switch matrix includes 1,048,578 signal connections and two common grounds. As a result of the space needed to route the electrode leads connecting heaters and bond pads, the middle wiring stage needs to be extended.

In the fabrication of a more preferred embodiment of the present invention wherein 1024×1024 switch matrix measures 1 ×210 cm², air trenches are prepared between adjacent switches to further confine light and to allow the waveguiding structures to be closer together. In this embodiment, the crossing angles used are greater than 37°, bend radii are larger than 10 µm, and all 1,048,576 switching states can be addressed independently at the same drive power.

In a still more preferred embodiment of the present invention, each of the 1 x2 Y-branch-based switches is replaced with a 2x2 multimode interference (MMI) switch (see Fig. 2), and the switching submatrices are staggered to decrease the chip length. The result is a 1024×1024 switch matrix having dimensions of 4.2×6.3 cm², allowing four such complex structures to fit on a standard 6" (15 cm) silicon wafer.

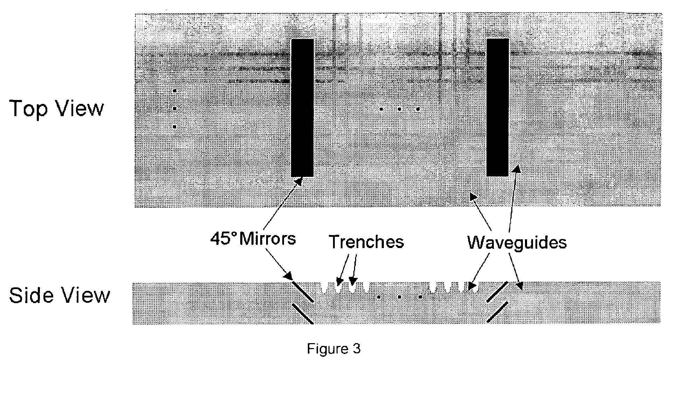

In another preferred embodiment of the current invention, multi-level optical interconnects are utilized (see Fig. 3) to minimize chip dimensions and eliminate the excess loss at waveguide crossings.

Fabrication of the switch matrix of the invention may be accomplished according to any means known in the art. Suitable methods include, but are not necessarily limited to, mask lithography, phase mask lithography, laser direct writing, and electron beam direct writing. The trenches are preferably fabricated using Excimer laser ablation or electron beam direct writing followed by reactive ion etching.

Further contemplated in the present invention is a method for performing an optical switching function. In the method of the present invention, an incoming optical signal is coupled to a first switch in the planar switch matrix of the invention. In the practice of the invention, the other switches in the matrix will be set "on" or "off" by employing the thermo-optic effect in order to create the desired "route" of the incoming light signal from switch to switch through the switching matrix and output through the desired switch.

The instant invention is not limited to a specific class of materials to be employed in the invention but rather by the differences in the refractive indices thereof and their mutual compatibility in the fabrication process. A preferred embodiment of the present invention employs organic polymers in the thermo-optically controlled waveguide structures. Organic polymers are well known to exhibit a large thermo-optic coefficient. Low refractive index polymers suitable for use as cladding in a preferred embodiment of the present invention include but are not limited to copolymers of tetrafluoroethylene and 4,5-difluoro-2,2-bis(trifluoromethyl)-1,3-dioxole (refractive index of 1.28 at 1550 nm) and polyhexafluoropropylene (refractive index of 1.32 at 1550 nm). High refractive index polymers suitable for use as the core in a preferred embodiment of the present invention include but are not limited to polystyrene (refractive index of 1.59 at 1550 nm), polycarbonate (refractive index of 1.59 at 1550 nm), poly(o-chlorostyrene)(refractive index of 1.61 at 1550 nm, polyamide-imide (refractive index of 1.64 at 1550 nm), and poly(9-vinyl carbazole) (refractive index of 1.68) at 1550 nm).

The inventors hereof further contemplate employment of inorganic waveguide materials that exhibit large differences in refractive index. Such materials include a waveguide structure wherein silicon nitride is employed for the waveguide core and silicon dioxide for the cladding. These two materials exhibit an index contrast of about 30%. Waveguide properties can be specifically tailored by adjusting the index contrast for optimum performance in a given application. This is readily accomplished for index contrast values below 30%, by forming a core composition that is an alloy of silicon nitride and silicon dioxide, a material known as silicon oxynitride.

### Device Fabrication

A preferred fabrication method involves the use of two photosensitive liquid monomers, CL and CO, to form optical waveguides. CL is used for the waveguide clad and CO is used for the waveguide core. The refractive index of CL is lower than the refractive index of CO. The device fabrication sequence is as follows:
- CL is spin-coated on a silicon wafer.
- CL is cured by blanket exposure under a UV lamp, the full layer polymerizes and solidifies.
- CO is spin-coated on top of the cured CL.
- CO is exposed under a UV lamp through a photomask with an optical waveguide pattern.
- CO is developed with an organic solvent, leaving free-standing structures that represent the waveguide cores.
- CL is spin-coated on top of the cured CL/CO on the wafer.
- CL is cured by blanket exposure under a UV lamp, the full layer polymerizes and solidifies, resulting in buried-channel waveguides where the CO cores are fully surrounded by CL.
- Sputtering is used to deposit metal on the polymer.
- Photolithography is used to pattern the metal and form heaters and the base of interconnects and wire bond pads.
- Electroplating is used to plate up the wire bond pads and electrical interconnects leading from the bond pads to the heaters.
- Excimer ablation is used to open air slots between devices to increase the optical confinement in waveguides and minimize cross-talk between adjacent waveguides.

## Claims

1. A planar switch matrix comprising
a waveguide layer and an electrode layer,
the waveguide layer comprising a plurality of 1 ×2 Y-branch thermo-optic digital optical switches or 2×2 multimode interference (MMI) switches, each switch branch comprising a buried channel waveguide exhibiting a refractive index contrast of greater than 5%,
the electrode layer comprising a plurality of electrodes, each electrode being disposed on the cladding layer of said buried channel waveguide, two thus disposed electrodes per Y-branch.

2. The planar switch matrix of claim 1 wherein air trenches are prepared between adjacent switches.

3. The planar switch matrix of claim 1 or 2 wherein switching submatrices are staggered.

4. The planar switch matrix of any preceding claim wherein multi-level optical interconnects are utilized.

5. A method for performing an optical switching function, the method comprising
(a) directing an incoming optical signal to a first switch in a planar switch matrix;
(b) directing said incoming signal to one or more additional switches by virtue of selective thermo-optically driven activation and deactivation of an interconnected sequence of one or more of the other switches in the planar switch matrix;
said planar switch matrix comprising a waveguide layer and an electrode layer,
the waveguide layer comprising a plurality of 1 ×2 Y-branch thermo-optic digital optical switches or 2×2 multimode interference (MMI) switches, each switch branch comprising a buried channel waveguide exhibiting a refractive index contrast of greater than 5%,
the electrode layer comprising a plurality of electrodes, each electrode being disposed on the cladding layer of said buried channel waveguide, two thus disposed electrodes per switch branch.

6. The method of claim 6 wherein the planar switch matrix includes air trenches are prepared between adjacent switches.

7. The method of claim 5 or 6 wherein the switching submatrices in the planar switch matrix are staggered.

8. The method of claim 5,6 or 7 wherein the planar switch matrix includes multi-level optical interconnects.
